# EUROPEAN PATENT APPLICATION

(11) **EP 0 722 241 A2**
(43) Date of publication of application: **17.07.1996**
(21) Application number: 96300247.2
(22) Date of filing: 12.01.1996
(51) Int. Cl.: H04M 3/50, H04M 3/38

(54) **Secure access telephony server system**

(30) Priority: 13.01.1995 GB 9500665
(71) Applicant: INTELLPROP LIMITED, Guernsey, Channel Islands (GB)
(72) Inventor: Wilson, Jeffrey, Fareham, Hampshire, PO16 7OH (GB)
(74) Representative: Pilch, Adam John Michael

(57) **Abstract**

A telephony server system having the capability of providing secure access to stored information and/or facilities includes a telephony server (10) connected to telephones (14) (or other telephony equipment) either via the PSTN or via a PABX. The telephony server (10) is also connected to a database (16) holding details of authorised users' PINs.

When a user rings in and attempts access to the telephony server (10) by entering his PIN, if the PIN is valid according to the database (16), a random number is generated and sent to the user by a predetermined route such as via a paging system (24, 26). The user then enters the random number whereupon access to the information and/or facilities is allowed. Since the random number can be used only once for each access attempt, subsequent fraudulent use of the PIN and random number will not allow further access.

## Description

This invention relates to telephony server systems having the capability of providing secure access to stored information and/or facilities.

Telephony servers can store information, such as financial share prices and data, and/or messages deposited by calling parties, for later retrieval. The information and/or messages can be provided in the form of voice, fax, video or data sent over a telephone line upon retrieval. It is known to provide secure access to such services, where the information may be confidential, by the use of a PIN (personal identification number) scheme. The appropriate PIN is entered by the retrieving caller, typically by means of one of a number of possible interactive techniques such as MF (multi-frequency), PULSE (pulse dial identification) or SIR (speaker independent recognition). The PIN entered by the retrieving caller is checked against a database associated with the telephony server to verify the caller's right to access the information. Although this technique provides a level of security, it has a number of disadvantages as a result of which the security can be compromised, these being set out in the following.

Firstly, the incoming line to the telephony server could be monitored and the PIN recorded or otherwise identified, if entered using MF, PULSE or SIR. The number could then be used subsequently for unauthorised access.

Secondly, the PIN could be overseen by another party when being entered by the authorised user; this again would provide the opportunity for subsequent unauthorised access.

Thirdly, the central database could be accessed to obtain details of valid PIN codes and their application.

Fourthly, data links between the telephony server and the database holding the PIN code details could be monitored.

The last two of these possibilities could to some extent be made more secure by the use of complex data security methods. However, the first two possibilities cannot be addressed in the same way, since the common interfaces to telephony servers, such as the PSTN (public switched telephone network), require simple interactive techniques to be used, such as MF, the use of which can readily be observed by other parties.

According to the invention there is provided a secure access telephony server system comprising a telephony server for storing data and/or providing facilities for retrieval and/or use by an authorised user via a telephone network, a database associated with the telephony server and holding details of valid PINs corresponding to respective authorised users, the telephony server having means inhibiting access to the data and/or facilities unless a valid PIN held in the database is received upon attempted access, wherein the telephony server includes means for generating a random number upon receipt of a valid PIN during attempted access, and wherein the system includes means for sending the generated random number via a transmission route determined by the system and intended for the authorised user, access being further inhibited until the generated random number has been received by the system from the party attempting access.

A preferred embodiment of the invention, to be described in more detail below, effectively provides a combination of a telephony server and a one-off pad which provides secure access to information or facilities on one occasion only; after access, the security code associated with the one-off pad is invalid and so cannot be re-used by a fraudulent user if recorded or otherwise identified.

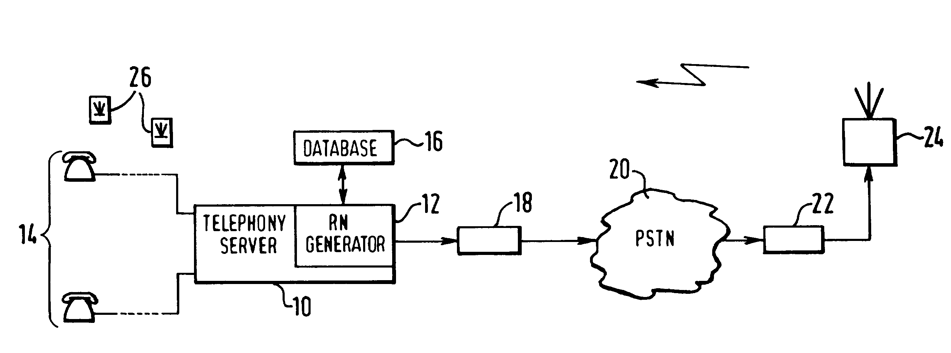

The invention will now be described by way of example with reference to the accompanying single figure drawing which shows a secure access telephony server system according to an embodiment of the invention.

Referring to the drawing, there is shown a telephony server 10, including a random number generator 12, connected to telephones 14 (or other telephony equipment such as fax machines, modems or video systems) either via the PSTN or via a PABX (private automatic branch exchange). The telephony server 10 is also connected to a database 16 holding details of authorised users and their PINs.

The telephony server 10 may, for example, be a Telsis Hi-Call, particular features of which are described in International Patent Application Publication No. WO 92/22165. In that publication, the telephony server is referred to as a voice services equipment (VSE). Other terms include voice response system (VRS) or interactive voice response (IVR) equipment.

A modem 18 connects the telephony server 10 via the PSTN 20 and another modem 22 to a paging system transmitter 24. Paging transmissions are received by pagers 26 held by authorised users of the system.

In use of the system, confidential information is placed on the telephony server 10 either from callers (via the PSTN) or locally through a management interface. Users who are permitted access to such information are defined in the database 16. Once a message and/or other information has been deposited, the valid users can be alerted, such as by paging, to indicate that new information is available; alternatively, the users may call in at regular intervals to check whether anything has been deposited. Upon calling in, each user enters his PIN code for identification of the user and his particular access rights. The entered PIN is checked on the database 16, as is current standard practice. However, if this check is passed, instead of providing the information to the user, a further level of security is involved. Once the entered PIN code has been found to be valid, the random number generator 12 generates a random number. This number is sent by the telephony server 10 to the user, for example (as shown) via a paging network. This can be done using an automatic modem link to the paging bureau; as shown, this involves the modems 18, 22, the PSTN 20 and the paging system transmitter 24. The user's contact details, namely paging number and bureau, are held on the database 16. This route makes it almost impossible for this number to be intercepted and cross-referenced with the incoming call to the telephony server 10. When the random number is received on the user's pager 26, the user enters it by way of one of the telephones 14 and the system checks the number against that generated by the random number generator 12. If correct, the relevant information is provided. After the user has cleared down (terminated the call), the random number is no longer held by the telephony server 10. Thus the system utilises one random number for a single access attempt only.

Depending on the means for sending the random number to the user, the above operation may be accomplished either in a single telephone call or in two calls. In the latter case, the caller could clear down the initial call, having entered the PIN code, and await reception of the random number. When the number has been received, the caller would ring back, re-confirm his identity by means of the PIN code and then enter the random number whereupon access would be enabled.

In addition to accessing information, this technique can be used to provide secure access to other telephony server applications such as onward call routing. For instance, to bill international company calls to a company account, employees can use a telephony server at a company's location to provide the means of dialling internationally. The normal level of PIN security may be considered insufficient in these circumstances, wherein the present random number/one-off pad technique can then be utilised.

Information provided by the telephone server 10 may be in the form of voice, fax, data or video formats, whereupon the telephones would be replaced or supplemented by appropriate equipment such as fax machines, modems or video receivers.

Other alerting facilities may be used instead of paging; for example SMS (short messaging system) on mobile telephones may be utilised. Alternatively, the telephony server may be arranged to ring back the user on a number stored on the database. This is a less versatile system but has the advantage that all users do not need to carry pagers.

The database 16 for the PINs may be integral to the telephony server 10, as may the modem 18.

The length of the random number can be set as required, depending on the abilities of the transmission route to carry this information. Typically, a length of 8 to 10 digits can be utilised.

Further security can be added by having an agreed format of entry for the random number, such as by entering the number in reverse order (last digit first) to that sent. This stops random number messages received on lost or stolen pagers being used by fraudulent users and can, in fact, identify fraudulent use if the correct digits are received by the system but not in the agreed order.

## Claims

1. A secure access telephony server system comprising a telephony server (10) for storing data and/or providing facilities for retrieval and/or use by an authorised user via a telephone network, a database (16) associated with the telephony server (10) and holding details of valid PINs corresponding to respective authorised users, the telephony server (10) having means inhibiting access to the data and/or facilities unless a valid PIN held in the database (16) is received upon attempted access, wherein the telephony server (10) includes means (12) for generating a random number upon receipt of a valid PIN during attempted access, and wherein the system includes means (18) for sending the generated random number via a transmission route (20, 22, 24) determined by the system and intended for the authorised user, access being further inhibited until the generated random number has been received by the system from the party attempting access.

2. A system according to claim 1, wherein the PIN and the generated random number are both receivable by the system in the same telephone call during attempted access.

3. A system according to claim 1, wherein, in response to a valid PIN entered during attempted retrieval, the initial call is then terminated and the generated random number is sent, whereupon the system allows access during a subsequent call upon receipt of both the valid PIN and the generated random number.

4. A system according to claim 1, claim 2 or claim 3, wherein the data is stored information and/or deposited messages.

5. A system according to any one of the preceding claims, wherein the facilities provided by the telephony server (10) include onward call routing.

6. A system according to any one of the preceding claims, wherein the transmission route for sending the generated random number involves a paging network (22, 24), the random number being received by a paging receiver (26) associated with an authorised user.

7. A system according to any one of claims 1 to 5, wherein the transmission route for sending the generated random number involves a short messaging system on a mobile telephone network.

8. A system according to any one of claims 1 to 5, wherein the transmission route for sending the generated random number involves the telephony server (10) ringing back the user on a telephone number stored on the database (16).

9. A system according to any one of the preceding claims, wherein access is allowed only if the system receives the random number in a predetermined order different to that transmitted to the party attempting access.
